# EUROPEAN PATENT SPECIFICATION

(11) **EP 3 507 447 B1**
(45) Date of publication and mention of the grant of the patent: **22.09.2021**
(21) Application number: 17758605.4
(22) Date of filing: 07.08.2017
(51) Int. Cl.: E21B 41/00, E21B 17/08

(54) **APPARATUS FOR TRANSMITTING TORQUE THROUGH A WORK STRING**
VORRICHTUNG ZUR ÜBERTRAGUNG EINES DREHMOMENTS DURCH ARBEITSSTRANG
APPAREIL DE TRANSMISSION DE COUPLE À TRAVERS UN TRAIN DE TIGES DE TRAVAIL

(30) Priority: 31.08.2016 GB 201614720
(43) Date of publication of application: 10.07.2019
(73) Proprietor: Deltatek Oil Tools Limited, Aberdeen, Aberdeenshire AB10 1TN (GB)
(72) Inventor: HORN, Tristam, Aberdeen Aberdeenshire AB15 8XJ (GB)
(74) Representative: Lawrie IP Limited
(86) International application number: PCT/GB2017/052324
(87) International publication number: WO 2018/042148

(56) References cited:
- EP-A2- 1 878 524
- WO-A1-2014/107813
- WO-A1-2014/151518
- WO-A2-2006/109090
- US-A- 6 105 473
- US-A1- 2008 168 868
- US-A1- 2011 048 710

## Description

### FIELD OF THE INVENTION

The present invention relates to an apparatus for use in the oil and gas industry, particularly for subsea operations on offshore drilling rigs within a work string. One aspect of the invention relates to an articulated joint for coupling a casing string or subsea infrastructure to a work string and another aspect relates to a method of deploying a casing string or subsea infrastructure on a landing or work string.

### BACKGROUND

Casing strings and subsea infrastructure are installed into or on to subsea oil and gas wells to facilitate the production of hydrocarbons from subsurface reservoirs. The equipment is installed by means of a work string made up of numerous sections of steel tubular components, commonly referred to as a landing string.

The work string or landing string may be attached to the top of a casing string or subsea infrastructure via a running tool which may require rotational torque to be transmitted through the string to make up the connection and to break out the connection. Rotational torque may be required to be transmitted through the work string into the casing string or subsea infrastructure to align the equipment with a desired orientation once at the installed depth or to aid in getting the casing to the desired depth.

The work string may be used as a conduit for pumping fluids and/or objects through the casing string or subsea infrastructure. The fluids may be, but are not limited to seawater, drilling mud and cement slurry. The objects may be but are not limited to cement wiper darts and tool activation darts or balls. The work string therefore must have internal bore pass through free from square shoulders causing potential obstructions for objects, and pressure retaining ability including all constituent components.

In the case of certain geographical locations, it is required to stop installation operations until sufficiently benign environmental conditions are available to install casing strings and subsea infrastructure. This may be due to sea current and/or wave force loading onto the casing strings and the subsea infrastructure causing damage to the work string via large amplitude bending moments being transferred through the connection to the work string.

In the instance of operations having been stopped to mitigate risk of damage to the work string via bending moment transfer, a need for a work string component which provides rotational torque to enable engagement and disengagement of some running tools, and achieving desired orientation of infrastructure, whilst not transferring a bending moment to the work string is necessary.

WO 2014/151518 A1, which is consideredd the closest prior art, describes a downhole motor drive shaft assembly for drilling a subterranean wellbore. The assembly includes a drive shaft having a longitudinal rotational axis, a plurality of drive key sockets, an end housing having a longitudinal rotational axis, a plurality of circumferentially spaced axial keyways, and a concave spherical thrust bearing surface, and a drive key operatively connecting each drive key socket with a respective axial keyway for transferring torque from the drive shaft to the end housing.

WO 2014/107813 describes a joint for a downhole mud motor including a ball having a ball shaft extending therefrom along a ball axis. The ball includes a recess formed therein. A key is configured to be mounted to the ball. In addition, the joint includes a socket having a socket shaft extending therefrom along a socket axis. The socket axis is anti-aligned with the ball axis. A slot is formed inside the socket and configured to receive the key.

US 2011/048710 describes a remotely operated lifting top drive cement head having the ability to swivel or rotate about a central vertical axis.

WO 2006/109090 A2 describes a swivel sub for connection in a work string between a work string and a downhole apparatus. The sub has a first cylindrical body, including a sleeve portion having one or more teeth and a second cylindrical body being partially located within the sleeve portion. The bodies are arranged to rotate relative to each other. A sliding sleeve, having one or more teeth arranged mutually engage with the first teeth, is axially moveable between disengaged and engaged positions.

### SUMMARY OF THE INVENTION

The invention is set out in the appended claims.

One aspect of the invention relates to an articulated joint for coupling a casing string or subsea infrastructure to a work string, the joint comprising:
a first connection;
a second connection;
a joint seat located between the first connection and the second connection;
a joint body provided on the joint seat and connected to the second connection, wherein the joint body can articulate freely within the joint seat;
a locking mechanism for reversibly locking the joint, the locking mechanism comprising:
   a sleeve fitting over the first connection, the joint seat and joint body;
   means for holding the sleeve to the joint seat and joint body at a first position and a second position;
   wherein the sleeve and holding means are configured such that, when the sleeve is held at the first position the sleeve permits the joint body to move freely within the joint seat, and when the sleeve is held at the second position the sleeve engages the second connection and prevents the joint body from moving freely within the joint seat.

Another aspect of the present invention relates to a method of deploying a casing string or subsea infrastructure on a landing or work string, the method comprising:
(a) arranging an articulated joint in a locked configuration to prevent pivoting of the joint;
(b) supporting a casing string or subsea infrastructure on a landing or work string via the articulated joint;
(c) arranging the articulated joint in an unlocked configuration to permit pivoting of the joint; and
(d) deploying the casing string or subsea infrastructure supported on the landing string or work string via the articulated joint through seawater to the seabed.

### BRIEF DESCRIPTION OF THE DRAWINGS

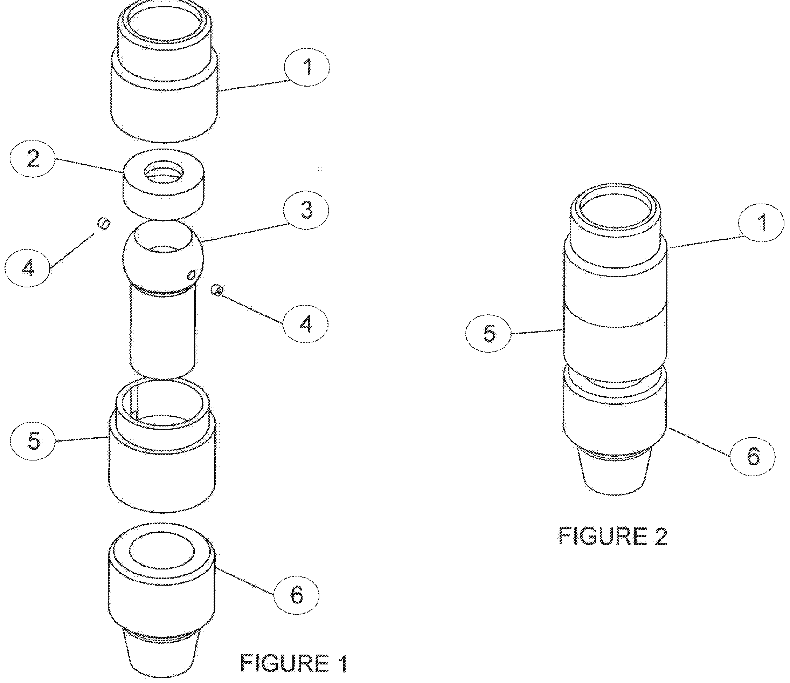

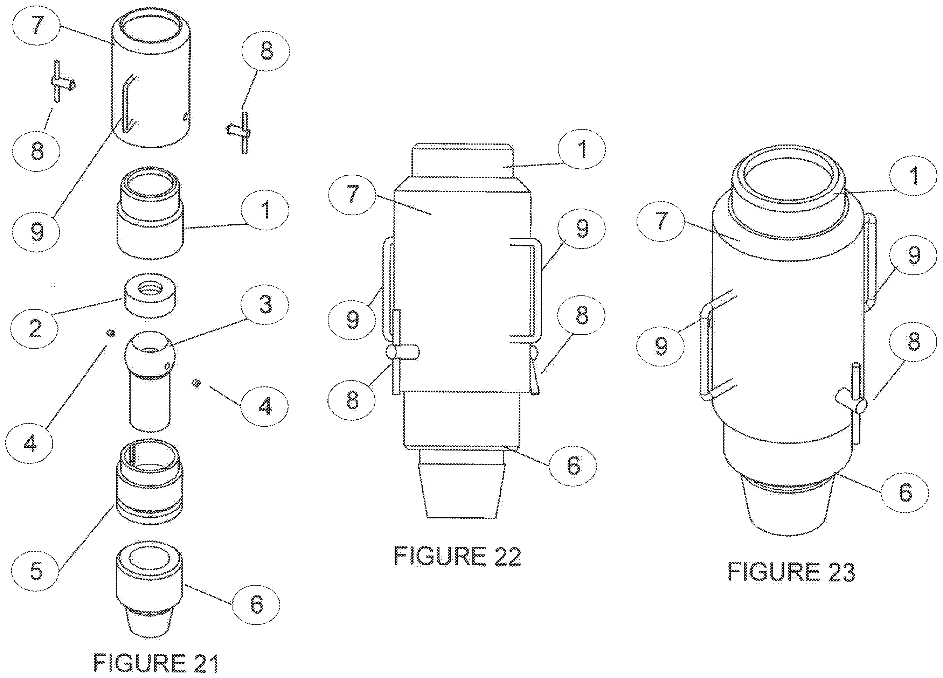

The invention will now be described, by way of example, with reference to the accompanying drawings, in which Figures 21 to 32 show an aspect of the present invention, and Figures 1 to 20 show apparatus illustrative of the background of the invention and which may be combined with the locking mechanism of Figures 21 to 32.
Figure 1 shows an apparatus in an exploded view.
Figure 2 shows an assembled view of the apparatus of Figure 1.
Figure 3 shows the apparatus of Figure 2 viewed from above.
Figure 4 shows a section view of section A-A of the apparatus.
Figure 5 shows a section view of section B-B of the apparatus.
Figure 6 shows the section view of Figure 5 with a portion highlighted as section A.
Figure 7 shows the detail of section A from Figure 6.
Figure 8 shows the apparatus in a partially articulated state from the same perspective of that shown in Figure 4.
Figure 9 shows the apparatus in a partially articulated state from the same perspective of that shown in Figure 5, with a section view highlighted as section A.
Figure 10 shows, in detail, section A from Figure 9.
Figure 11 shows an apparatus in an exploded view.
Figure 12 shows the assembled apparatus of Figure 11.
Figure 13 shows a view of Figure 12 with section views B-B and C-C labelled.
Figure 13A shows a view of section C-C from Figure 13.
Figure 14 shows a view of section B-B from Figure 13 with a further section D-D labelled.
Figure 14A shows a view of section D-D.
Figure 15 shows a view of the apparatus of Figure 12 in a partially articulated state with sections B-B and C-C labelled.
Figure 15A shows a view of section C-C of Figure 15.
Figure 16 shows a view of section B-B from Figure 15 with a further section D-D labelled.
Figure 16A shows a view of section D-D from Figure 16.
Figures 17 and 17A show an apparatus in exploded view.
Figure18 shows the assembled apparatus of Figure 17.
Figure 19 shows a view of Figure 18 with section C-C labelled.
Figure 19A shows a view of section C-C from Figure 19.
Figure 20 shows a view of the apparatus of Figure 18 whilst partially pivoted with section E-E labelled.
Figure 20A shows view of section E-E of Figure 20 with a further section F-F labelled.
Figure 20B shows a view of section F-F of Figure 20A with a further section H-H labelled.
Figure 20C shows a view of section H-H of Figure 20B.
Figure 21 shows an aspect of the present invention and shows an exploded view of the components that provide a locking feature.
Figure 22 shows an assembled view of the apparatus of Figure 21.
Figure 23 shows an isometric view of the locking apparatus in a locked position.
Figure 24 shows the locking mechanism with the apparatus viewed from above in the locked position and sections A-A and B-B labelled.
Figure 25 shows a section view of section A-A of Figure 24.
Figure 26 shows a section view of section B-B of Figure 24.
Figure 27 shows an isometric view of the locking apparatus in an unlocked position.
Figure 28 shows a section view of section A-A of Figure 24 in an unlocked position.
Figure 29 shows a section view of section B-B of Figure 24 in an unlocked position.
Figure 30 shows a top view of the apparatus including a locking feature in an unlocked position and a partially articulated state. Sections A-A and B-B are also labelled in this Figure.
Figure 31 shows a section view of A-A of Figure 30.
Figure 32 shows a section view of B-B of Figure 30.

### DETAILED DESCRIPTION OF THE INVENTION

Generally an apparatus which enables installation operations of casings and subsea infrastructure to be carried out with a work string is disclosed.

A typical installation operation of a casing string first involves the assembly of the casing string from the drilling unit, whereby many individual sections of tubular are attached together by means of a connection to create the full length of the casing string from the total depth of the section drilled into the subsurface formation, back to the wellhead, which for subsea wellhead systems is typically at the seabed.

With subsea wellhead systems used to construct offshore oil and gas wells, a running tool is required to be connected to the top of the casing string when running conductor (first casing string for structural support of the rest of the well), surface casing (a subsequent casing string run with the wellhead on the top), and any intermediate liner strings (a liner is a casing string where the top is below the wellhead depth). This running tool is then run down through the seawater to the intended setting depth on a work string, commonly referred to as a landing string. This setting depth for subsea wellhead systems is typically at the seabed, which depending on the water depth at the well site can be as much as many thousands of metres below sea level.

When installing subsea infrastructure from a mobile offshore drilling unit, such as, but not limited to, hydrocarbon production or water injection manifolds, hydrocarbon or water flow bases and subsea Christmas trees, a running tool is typically connected to the subsea infrastructure to facilitate connecting a work string to, and running the infrastructure through the seawater from the drilling unit to the intended final location, typically on the seabed. The installation can then be completed, the running tool released and recovered by recovering the work string with the running tool.

The connection between the running tool and the bottom of the landing or work string is typically one which is subjected to a large force due to environmental conditions loading the casing string or subsea infrastructure, and transferring that force into the landing string. This force can be as a result of, but not limited to, high wave or current motion. This force can limit the conditions in which the casing string or subsea infrastructure can be run through the sea surface in order to prevent damage and failure of the connection.

An apparatus according to an aspect of the invention may enables rotational torque to be transmitted from above the apparatus to below the apparatus, whilst enabling no bending moment to be transmitted from below the apparatus to above the apparatus by means of a flexible joint. In the same instance, the apparatus may have a large bore internal diameter to facilitate passing of objects through the internal diameter, whereby internal components can he shaped with a chamfered lead-in circumferentially to prevent inadvertent hang up features for objects passing through, and maintain internal pressure retaining ability. There is also provided a locking mechanism that includes a locking sleeve which if desired can be used to lock the tool in a rigid state in order to prevent articulation of the apparatus.

Figure 1 shows an exploded view of an example of the apparatus that enables the transmission of rotational torque. As shown in Figure 1, the apparatus may include a box connection 1 for connecting the apparatus to a landing or work string (not shown), a retainer ring 2, a pivot joint body 3, a pivot joint seat 5, drive pins and a pin connection 6 used to connect to the running tool to install the casing or subsea infrastructure.

During running of the casing string or subsea infrastructure through the sea surface, environmental loading causing a force to be imparted into the running tool and through the apparatus of Figure 1 is able to disturb the pin connection 6, which is attached to the pivot joint body 3, which is therefore also disturbed. The pivot joint body 3 is able to articulate freely within the pivot joint seat 5 - i.e. the pivot joint body 3 has sufficient space when located in the pivot joint seat 5 such that the pivot joint body 3 can articulate freely. The apparatus has a central axis leading in a longitudinal direction from the box connection 1 to the pin connection 6. In an example, the combined components when assembled can rotate 360 degrees about this central axis. Further, the pivot joint body 3 can pivot away from (or towards) the central axis. The pivot joint body 3 can pivot away from, or towards, the central axis by preferably 15 degrees. However, it is to be understood that the pivot joint body 3 can pivot away from, or towards, the central axis by any number of degrees that are above and below 15 degrees. Therefore, the pivot joint body 3 does not transfer any bending moment as a result of load through the apparatus in the box connection 1 or pin connection 6. In the example shown, the pivot joint body 3 is spherical, and the pivot joint seat 5 includes a shaped portion to receive the pivot joint body 3. As mentioned above, the shaped portion of the pivot joint seat may provide a gap between the pivot joint body 3 and the pivot joint seat 5 such that the pivot joint body 3 can articulate freely. Alternatively, the pivot joint body 3 may fit snugly in the pivot joint seat 5, but be provided with lubricant/oil between the pivot joint seat 5 and pivot joint body 3 such that the pivot joint body 3 can articulate freely.

The apparatus shown in Figure 1 may also include a drive pin 4, and may have one or more drive pins 4. The drive pin 4 is of a shape that can be, but is not limited to, one or more of a combination of cylindrical, spherical, part-spheroid, hemisphere, chamfered cylinder and filleted cylinder that interfaces within a recessed groove provided in the pivot joint seat 5. The recessed groove of pivot joint seat 5 is of a similar shape to that of the drive pin 4. As the drive pin 4 is provided in the recessed groove of the pivot joint seat 5, this prevents free rotation of the pivot joint body 3 relative to the pivot joint seat 5. The drive pin 4 must be of a shape that allows rotation about its axis within the groove in the pivot joint seat. The drive pin 4 can or cannot be positively connected to the pivot joint body 3.

During purposeful rotation of the work string from above to impart a rotational torque force through the apparatus, the box connection 1 transfers the rotational torque into the pivot joint seat 5, which transfers rotational torque force via the groove in the pivot joint seat 5 into the drive pin 4 which is positioned in the groove. The drive pin 4 transfers rotational torque into the pivot joint body 3 and then through the pin connection 6.

The pivot joint body 3 may also include a bore that allows for objects and/or fluid to run through from the box connection 1 and pin connection 6. The bore can be shaped to include a chamfer on the internal upper face to optimise the ability to pass objects through the bore. Therefore, the bore of pivot joint body 3 allows for a continuous conduit from a work or landing string to a casing or subsea infrastructure.

Figure 2 shows the assembled components of Figure 1. As can be seen in this Figure, the box connection 1 connects to the pivot joint seat 5. The pivot joint body 3 (not shown in Figure 2) allows for connection to the pin connection 6.

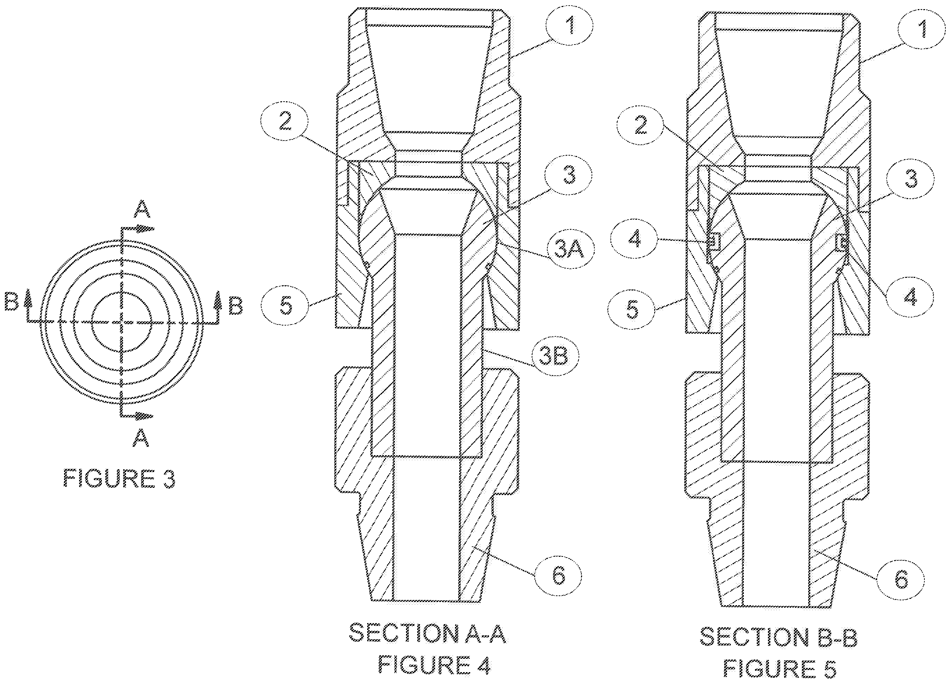

The assembled apparatus of Figure 2 is also shown in more detail in Figures 3 - 10.

Figure 3 shows a top view of the assembled apparatus if Figure 2 with sections A-A and B-B labelled.

Figure 4 shows a cross-sectional view of the apparatus along the section A-A. In the example shown here, the connected components are shown. As can be seen in this Figure, there may be provided the box connection 1, a retainer ring 2 located between the box connection 1 and the pivot joint seat 5. The pivot joint body 3 is located between the retainer ring 2 and the pivot joint seat 5. The retainer ring 2 keeps the pivot joint body 3 located in the pivot joint seat 5. The pivot joint body 3 has a spherical head 3A and an elongated body 3B extending from the spherical head 3A so as to be connected to the pin connection 6. Of course, the head 3A may be of the form of any shape that allows for free articulation of the pivot joint body 3 within the apparatus.

Figure 5 shows a cross-sectional view of the apparatus along the section B-B. This Figure differs from Figure 4 in that it shows the position of the drive pin(s) 4.

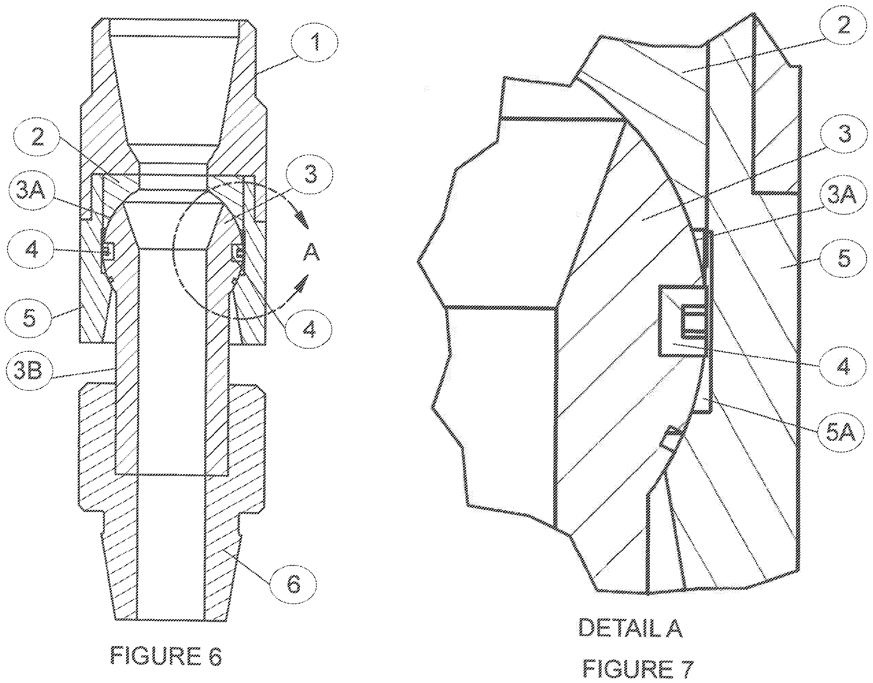

A detailed section C is labelled in Figure 6. This Figure also shows a cross-sectional view of the apparatus along the section B-B. Figure 7 shows the detail of section C of Figure 6 and, as can be seen in this Figure, the pivot joint seat 5 may include a drive pin recess 5A for receiving the drive pin(s) 4.

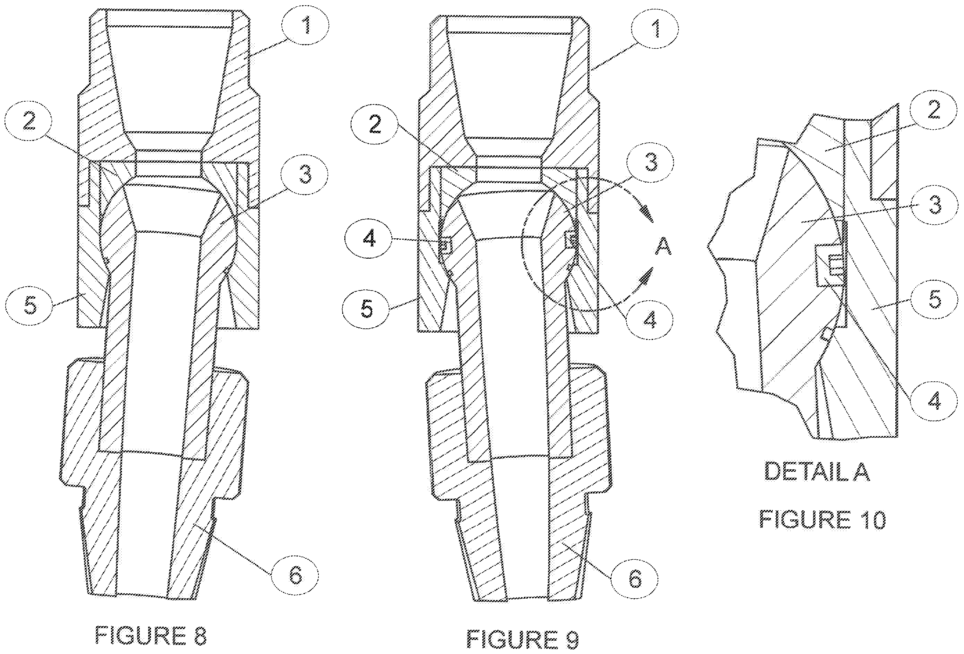

Figures 8-10 show the apparatus of Figure 2 in a partially articulated state. In Figures 3 and 9, it is shown how the pivot joint body 3 can freely articulate within the pivot joint seat 5. In Figure 10, the drive pin 4 is shown in detail A from Figure 9. Here it can be seen that the drive pin 4 moves in the recess of the pivot joint seat 5 to enable the free articulation of the pivot joint body 3 whilst maintaining the ability to transfer rotational torque through the apparatus from the box connection 1 to the pin connection 6.

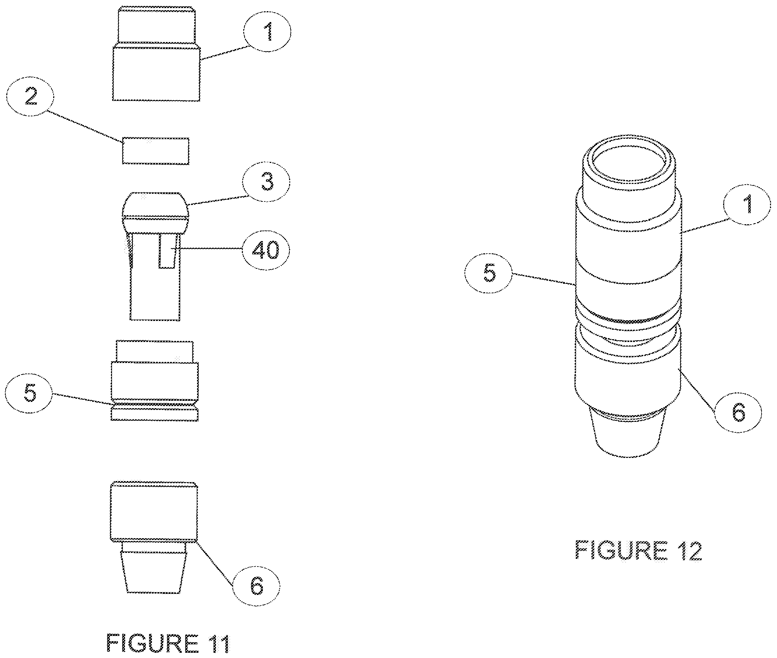

Figure 11 shows an alternative in that the apparatus differs from the apparatus of Figure 1 by providing at least one spline portion 40 on the pivot joint body 3. The at least one spline portion 40 works in the same way as the drive pin(s) 4 described above. For example, the at least one spline portion 40 transfers rotational torque through the pivot joint body 3, and then through the pin connection 6.

Figure 12 shows an assembled apparatus of Figure 11 As can be seen here, the box connection 1, retainer ring 2 (not visible), pivot joint body 3 (not visible), pivot joint seat 5 and pin connection 6 are all assembled together.

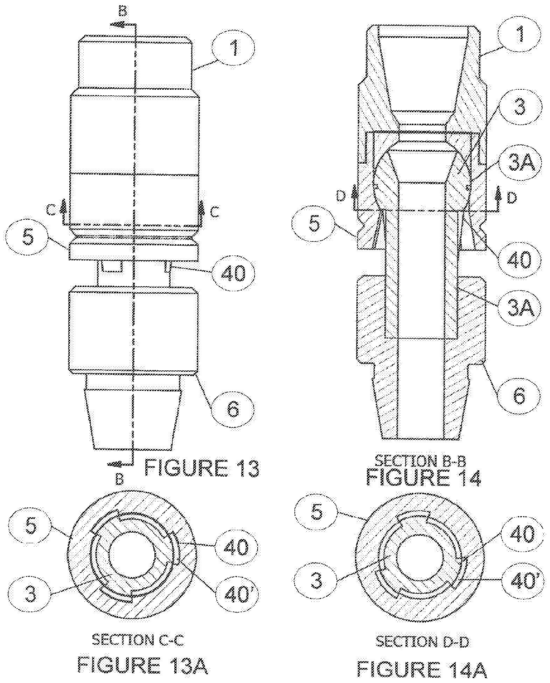

Figure 13 shows a side view of the apparatus of Figure 12 with sections B-B and C-C labelled. Figure 13A shows a view of section C-C. In Figure 13A, it can be seen that the at least one spline portion 40 of the pivot joint body 3 engages a recessed groove 40' in an inner wail of the pivot joint seat 5. The recessed groove 40' is shaped to receive the at least one spline portion 40. As is shown in this figure, there is provided three spline portions 40 and three recessed grooves 40', Of course, it is to be envisaged that there could be any number of splined portions 40 and recessed grooves 40'.

Figure 14 shows a cross-sectional view of section B-B of the apparatus of Figure 13. Here it can be seen that the pivot joint body 3 includes a head 3A and a body 3B - much the same as that described above in relation to Figure 4. The at least one spline portion 40 is shown to be located within the pivot joint seat 5 and to be provided on the elongated body 36. However, it is to be understood that at least a portion of the at least one spline portion 40 is engaged within a recessed groove 40' of the pivot joint seat 5. Figure 14A shows the section D-D of Figure 14. Here it can be seen, once again, that the at least one spline portion 40 engages with at least one recessed groove 40'. In the examples shown above, it is to be understood that the at least one spline portion 40 is a 'male' connector and the at least one recessed groove 40' of the pivot joint seat 5 is a 'female' connector - the 'male' connector being received by the 'female' connector.

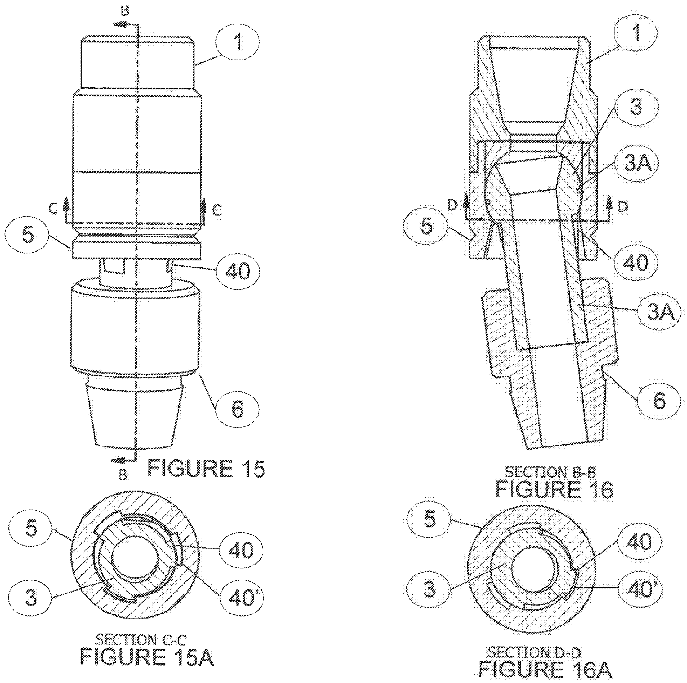

Figure 15 shows a view of the apparatus of Figure 11 in a partially articulated state with sections B-B and C-C labelled. Figure 15A shows a cross-section view of C-C of Figure 15.

Figure 16 shows a cross-section of section B-B of Figure 13 when the apparatus is in a partially articulated state. As can be seen here, the pivot joint body 3 can articulate freely as discussed above. The at least one spline portion 40 transfers rotational torque through the pivot joint seat 5 by engaging with the at least one recessed groove 40', and then through to pin connection 6 in much the same way that the drive pin(s) 4 above transfer rotational torque.

Figure 16A shows a cross-section of section D-D of Figure 16. As shown in Figure 16A, the at least one recessed portion 40' is shaped to receive the at least one spline portion 40. There is also provided a gap between the at least one spline portion 40 and the at least one recessed portion 40' to allow movement of the at least one spline portion 40. When the pivot joint body 3 freely articulates in the pivot joint seat 5, it is ensured that at least one spline portion 40 engages a respective recessed groove 40' to ensure that torque is transferred.

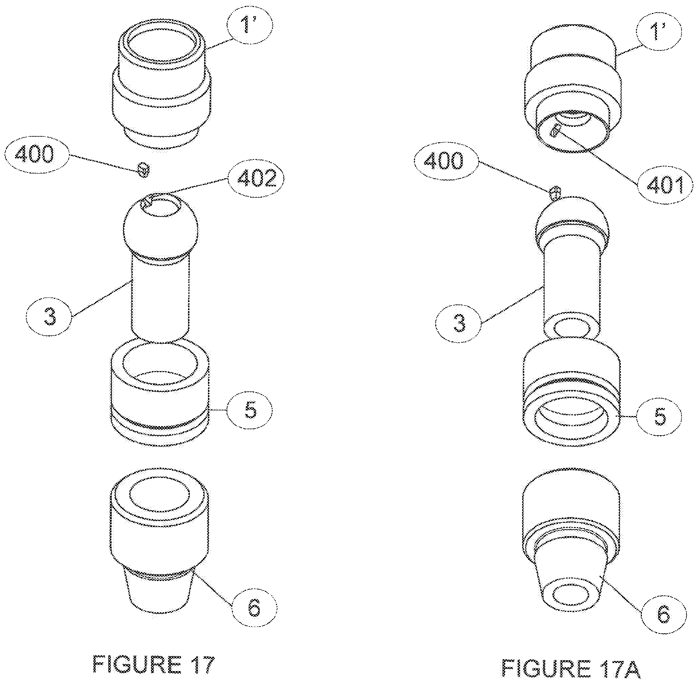

Figure 17 shows an alternative in that the apparatus differs from the apparatus shown in Figure 1 and Figure 11 by combining the box connection and retainer ring into a single component, hereinafter referred to as box connection 1' and providing at least one torque key 400 mounted within a machined receptacle 401 (as shown in Figure 17A) within the box connection 1'. The at least one torque key 400 works in the same way as the drive pin(s) 4 or spline portion 40 described above. For example, the at least one torque key 400 transfers rotational torque through the pivot joint body 3, and then through the pin connection 6.

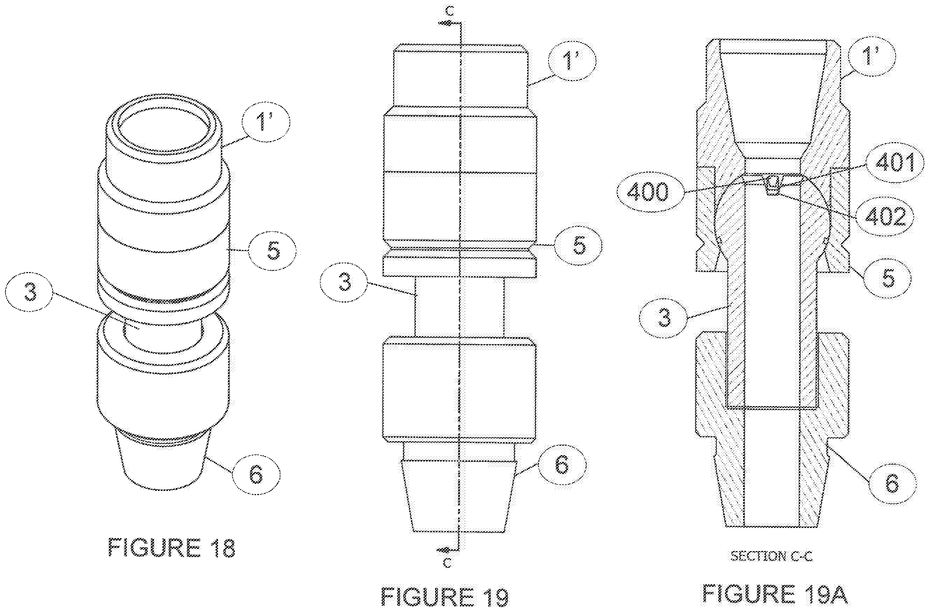

Figure 18 shows an assembled apparatus of Figure 17. As can be seen here, the box connection 1', pivot joint body 3, pivot joint seat 5 and pin connection 6 are all assembled together.

Figure 19 shows a side view of the apparatus of Figure 18 with section C-C labelled. Figure 19A shows a view of section C-C. In Figure 19A, it can be seen that the at least one torque key 400 is mounted within the machined receptacle 401 within the box connection 1'. The torque key 400 engages a recessed groove 402 provided in the pivot joint body 3. The recessed groove 402 is shaped to receive the at least one torque key 400 whilst the pivot joint body 3 is partially pivoted relative to the box connection 1'. As is shown in this example, there is provided one torque key 400 and one recessed groove 402. Of course, it is envisaged that there could be any number of torque keys and recessed grooves.

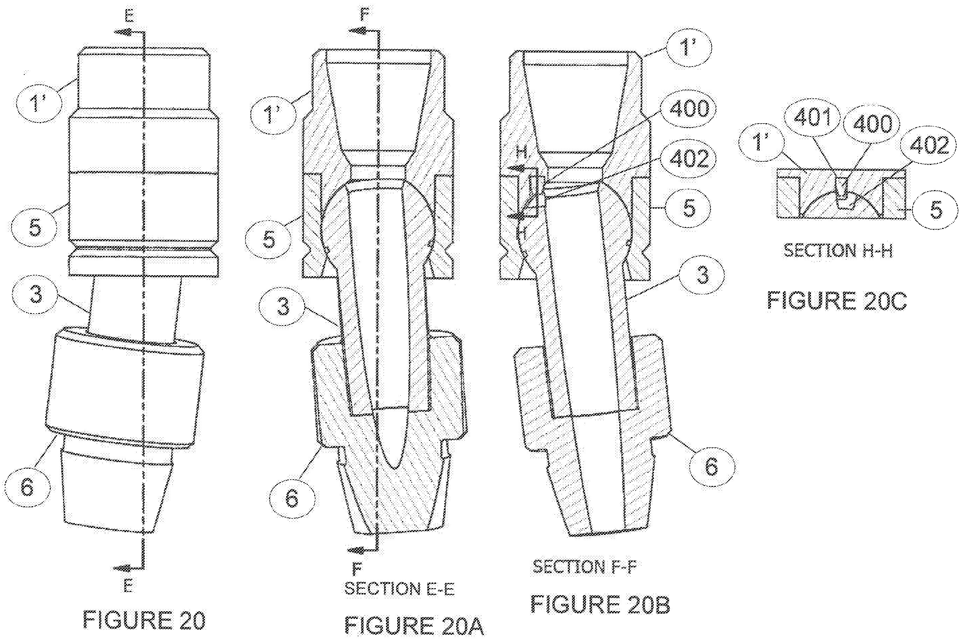

Figure 20 shows a side view of the assembled apparatus of Figure 17 whilst the apparatus is in a partially pivoted state with section E-E labelled. As can be seen here, the pivot joint body 3 can move freely as discussed above. The at least one torque key 400 transfers rotational torque through the pivot joint body 3 by engaging with the at least one recessed groove 402, and then through to pin connection 6 - in much the same way that the drive pin(s) 4 or at least one spline portion 40 above transfer rotational torque.

Figure 20A shows a cross-section of section E-E of Figure 20 with a further section F-F labelled. As shown in Figure 20A, the pivot joint body 3 is able to articulate into the recess of the pivot joint seat 5.

Figure 20B shows a cross section F-F with a further section H-H labelled. Figure 20C shows a cross-section of section H-H. As shown in Figures 20B and 20C, the recessed groove 402 within the pivot joint body 3 is shaped to receive the at least one torque key 400 to allow movement of the pivot joint body 3. When the pivot joint body 3 freely articulates in the pivot joint seat 5, it is ensured that at least one torque key 400 engages a respective recessed groove 402 to ensure that torque can be transferred from the box connection 1' through to the pin connection 6 if desired.

Figure 21 shows an aspect of the present invention. The above apparatus having been described in which there is an articulated joint between a work string/landing string and a casing or subsea infrastructure running tool. It is desirable to provide a locking mechanism that has the ability to lock the above apparatus - or any other articulated joint - in the rigid state (i.e., not articulated) at the discretion of the operator for the reasons of, but not limited to, transport, being stored in an upright orientation or in instances where weather conditions are sufficiently benign that using the tool in a flexible state is not preferred.

Figure 21 shows an example of such a locking mechanism used in conjunction with the example articulation joints discussed above. Figure 21 shows an exploded view of the components. As shown in Figure 21, there may be provided a locking sleeve 7, a Remotely Operated Vehicle (ROV) locking pin, an ROV grab handle 9, the box connection 1, retainer ring 2, pivot joint body 3, pivot joint seat 5 and pin connection 6. The example of Figure 21 shows the drive pin(s) 4 associated with Figures 1-10. However, it is to be understood that the locking mechanism shown in Figure 21 can also be used in conjunction with the at least one spline portion 40 shown in Figures 11-16. The locking mechanism can also be used in conjunction with the torque key 400 shown in Figures 17-20.

The ability to lock the articulated joint in a rigid state is provided by the locking sleeve 7 being in a position isolating the pin connection 6 or the pivot joint body 3 against the internal diameter of the locking sleeve 7, therefore providing the ability to interfere and transfer bending moment through the apparatus described above via the box connection 1, locking sleeve 7 and pin connection 6 (or pivot joint body 3). The locking sleeve 7 is held in either a position of providing no transfer of bending moment through the articulated joint (such as those described above) i.e., unlocked - or in a position of providing transfer of bending moment through the articulated joint (such as those described above) - i.e., locked.

As shown in Figure 21, the locking mechanism comprises an ROV retractable locking pin 8 provided in a machined profile that receives the ROV retractable locking pin on either the pivot joint seat 5 or box connection 1. The ROV retractable locking pin 8 can be but is not limited to being operated by an ROV - for example, by rotation of a threaded barrel, or by a spring mechanism, or by any other means that allows for the locking pin 8 to be received or removed from the locking sleeve 7 at the discretion of the operator. The ROV retractable pin 8 and machined locating profile can be, but are not limited to, a triangular, square, circular or multi-sided sectioned profile. The mechanism that enables the retraction and deployment of the ROV retractable locking pin 8 may be but is not limited to being operated via spring load retraction or on a threaded barrel. For assistance in operating the ROV retractable locking pin 8, ROV grab handles 9 can be mounted on the locking sleeve 7.

Figures 22 and 23 show the locking mechanism, in use, in a locked position. As can be seen in these Figures, the locking sleeve 7 fits over the box connection 1, the pivot joint seat 5 and a portion of the pin connection 6. Of course, the locking sleeve 7 may fit entirely over the pin connection 6.

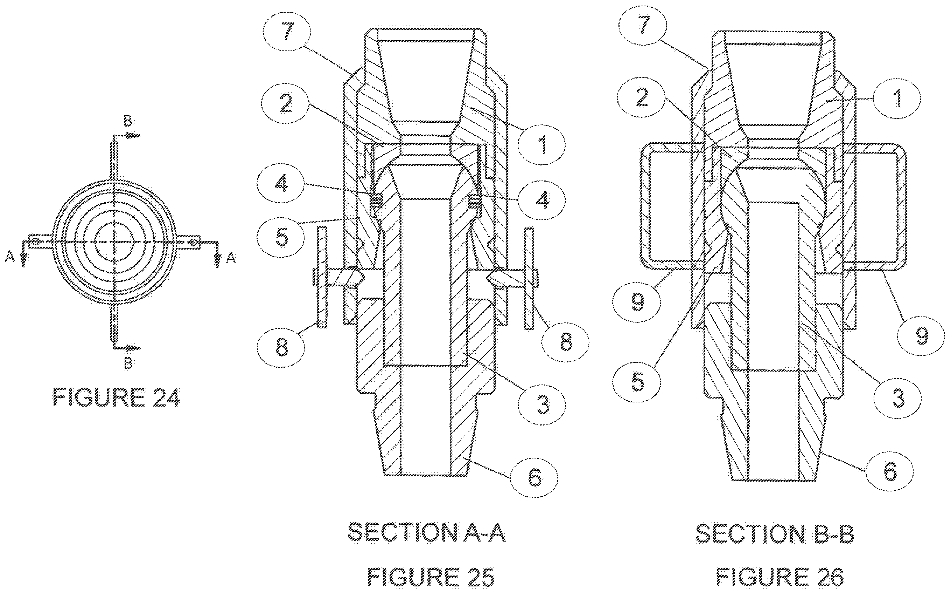

Figure 24 shows the locking mechanism from above with sections A-A and B-B labelled. Figures 25 and 26 show cross-sectional views of the apparatus described above (i.e., the articulated joint) with the locking mechanism included in the locked position. As shown in Figures 25 and 26, the locking sleeve 7 extends over, and engages with the pin connection 6 such that the apparatus described above (i.e. the articulated joint) cannot freely articulate. Note that rotational torque can still be imparted through the box connection 1 and through the apparatus to the pin connection 6.

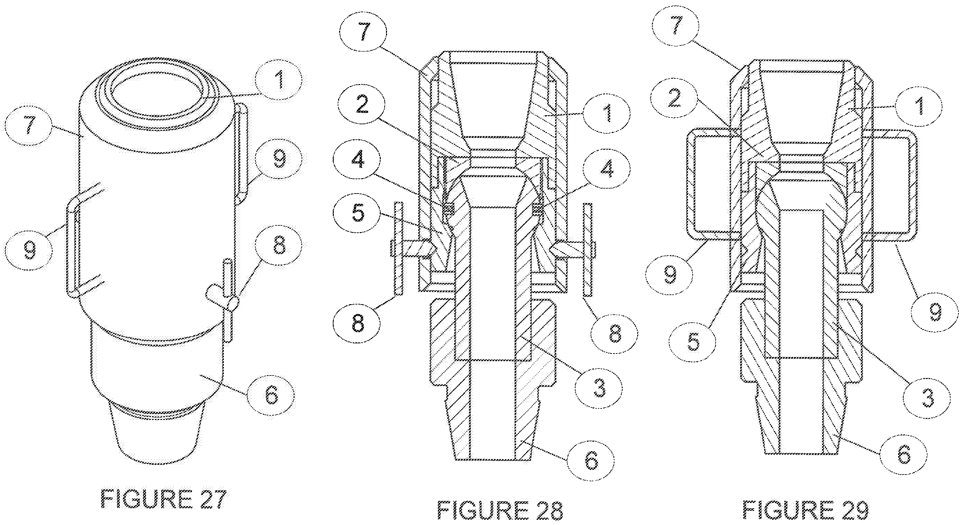

Figure 27 shows an isometric view of the locking sleeve 7 in an unlocked position.

Figures 28 and 29 show cross-sectional views of sections A-A and B-B of Figure 20 when the locking mechanism is provided on the apparatus described above in an unlocked state. As can be seen in Figures 28 and 29, the looking sleeve 7 does not extend over the pin connection 6 such that the apparatus described above (i.e., the articulated joint) and the pin connection can articulate freely within the pivot joint seat 5. Note that rotational torque can still be imparted through the box connection 1 and through the apparatus to the pin connection 6.

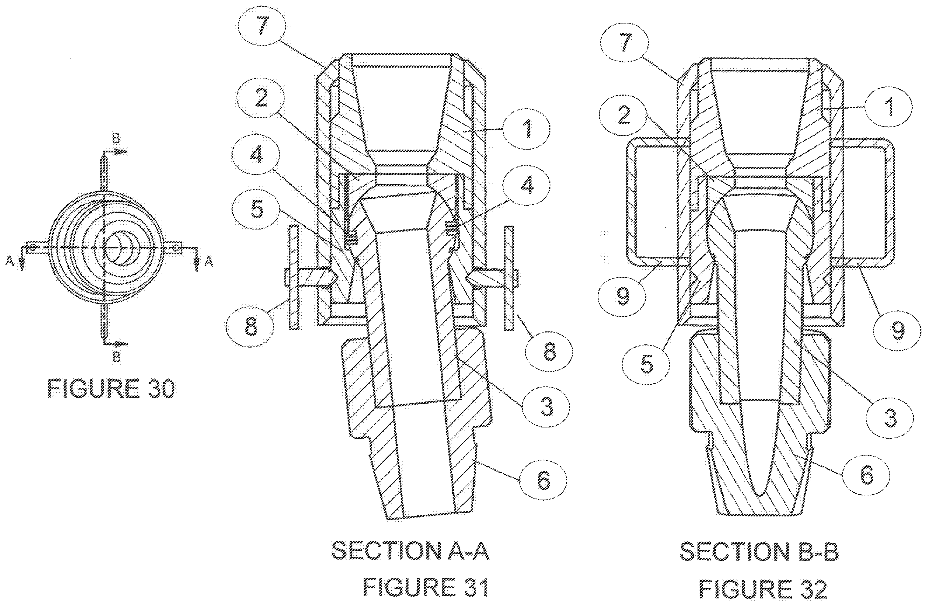

Figure 30 shows a top view of the apparatus with a locking mechanism in an unlocked position and the articulated joint in a partially articulated state with sections A-A and B-B labelled. Figures 31 and 32 show cross-sectional views of the sections A-A and B-B, respectively. Here, it can be seen that, in an unlocked position, the pivot joint body 3 can articulate freely within the pivot joint seat 5.

It is to be understood that the locking mechanism described above and the apparatus could be provided in a kit.

In a preferred embodiment, the material of the apparatus and locking mechanism described above is steel. Of course, the box connection 1, the retainer ring 2, the pivot joint body 3, the drive pin 4, the spline portion 40, the pin connection 6, the locking sleeve 7, the ROV retractable locking pin 8 and the ROV grab handle 9 could be made of other materials, such as X56, L80, P110, S135, V150 (examples of various grades of steel) or any other grades of AISI steel, hardened plastics, carbon fibre or any other high strength metallic material such as titanium, aluminium etc.. The seal mechanism to maintain pressure retaining ability between the internal and external of the apparatus can be any polymer or steel material to provide hydraulic sealing whilst the pivot joint body 3 is in various articulated positions within the pivot joint seat.

Although the invention has been described in terms of preferred embodiments as set forth above, it should be understood that these embodiments are illustrative only.

## Claims

1. An articulated joint for coupling a casing string or subsea infrastructure to a work string, the joint comprising:
a first connection (1);
a second connection (6);
a joint seat (5) located between the first connection (1) and the second connection (6);
a joint body (3) provided on the joint seat (5) and connected to the second connection (6), wherein the joint body (3) can articulate freely within the joint seat (5);
a locking mechanism for reversibly locking the joint, the locking mechanism comprising:
a sleeve (7) fitting over the first connection (1), the joint seat (5) and joint body (3)
means for holding the sleeve (7) to the joint seat (5) and joint body (3) at a first position and a second position;
wherein the sleeve (7) and holding means are configured such that, when the sleeve (7) is held at the first position the sleeve (7) permits the joint body (3) to move freely within the joint seat (5), and when the sleeve (7) is held at the second position the sleeve (7) engages the second connection (6) and prevents the joint body (3) from moving freely within the joint seat (5).

2. The articulated joint of claim 1, wherein the joint defines a through bore.

3. The articulated joint of claim 2, comprising a seal mechanism to provide hydraulic sealing between the through bore and the exterior of the joint whilst the joint body (3) is in various articulated positions within the joint seat (5).

4. The articulated joint of claim 1, 2 or 3, further comprising means for transferring rotational torque from the first connection to the second connection.

5. The articulated joint of claim 1, 2, 3 or 4, wherein the holding means comprises at least one locking pin (8) adapted to engage the joint seat (5).

6. The articulated joint of claim 5 wherein, when in the second position, the sleeve (7) is held by the at least one locking pin (8) in a position in which the second connection (6) is maintained in engagement with the internal diameter of the sleeve (7), such that the joint body (3) does not move freely.

7. The articulated joint of any preceding claim, wherein the second connection is a pin connection (6).

8. A method of deploying a casing string or subsea infrastructure on a landing or work string, the method comprising:
(a) arranging the articulated joint of claim 1 in a locked configuration to prevent pivoting of the joint;
(b) supporting a casing string or subsea infrastructure on a landing or work string via the articulated joint;
(c) arranging the articulated joint in an unlocked configuration to permit pivoting of the joint; and
(d) deploying the casing string or subsea infrastructure supported on the landing or work string via the articulated joint through seawater to the seabed.

9. The method of claim 8, further comprising translating the sleeve (7) provided on the articulated joint between a first position and a second position, in the first position the sleeve permitting pivoting of the articulated joint and in the second position the sleeve preventing pivoting of the articulated joint.

10. The method of claim 9, further comprising:
holding the sleeve (7) in the first position; and
holding the sleeve (7) in the second position.

11. The method of claim 8, 9 or 10, further comprising providing the articulated joint between the landing or work string and a running tool.

12. The method of claim 8, 9 or 10, further comprising providing the articulated joint within a work string.

13. The method of any of claims 8 to 12, further comprising passing objects through an internal bore of the articulated joint.

14. The method of any of claims 8 to 13, further comprising providing hydraulic sealing between a bore extending through the joint and the exterior of the joint whilst the joint is in various articulated positions.

15. The method of any of claims 8 to 14, comprising transmitting rotational torque through the joint.

## Patentansprüche

1. Knickgelenk zum Koppeln einer Verrohrung oder Unterwasserinfrastruktur an einen Arbeitsstrang, das Gelenk umfassend:
eine erste Verbindung (1);
eine zweite Verbindung (6);
einen Gelenksitz (5), der sich zwischen der ersten Verbindung (1) und der zweiten Verbindung (6) befindet;
einen Gelenkskörper (3), der auf dem Gelenksitz (5) bereitgestellt und mit der zweiten Verbindung (6) verbunden ist, wobei der Gelenkskörper (3) frei innerhalb des Gelenksitzes (5) geschwenkt werden kann;
einen Verriegelungsmechanismus zum reversiblen Verriegeln des Gelenks, wobei der Verriegelungsmechanismus umfasst:
eine Hülse (7), die über der ersten Verbindung (1), dem Gelenksitz (5) und Gelenkskörper (3) sitzt,
Mittel zum Halten der Hülse (7) an dem Gelenksitz (5) und Gelenkskörper (3) an einer ersten Position und einer zweiten Position;
wobei die Hülse (7) und Haltemittel so konfiguriert sind, dass, wenn die Hülse (7) an der ersten Position gehalten wird, die Hülse (7) dem Gelenkskörper (3) ermöglicht, sich frei in dem Gelenksitz (5) zu bewegen, und wenn die Hülse (7) an der zweiten Position gehalten wird, die Hülse (7) mit der zweiten Verbindung (6) in Eingriff ist und verhindert, dass sich der Gelenkskörper (3) frei in dem Gelenksitz (5) bewegt.

2. Knickgelenk nach Anspruch 1, wobei das Gelenk eine Durchgangsbohrung definiert.

3. Knickgelenk nach Anspruch 2, umfassend einen Dichtungsmechanismus, um hydraulische Dichtung zwischen der Durchgangsbohrung und der Außenseite des Gelenks bereitzustellen, während sich der Gelenkskörper (3) in verschiedenen gelenkigen Positionen innerhalb des Gelenksitzes (5) befindet.

4. Knickgelenk nach Anspruch 1, 2 oder 3, weiter umfassend Mittel zum Übertragen von Drehmoment von der ersten Verbindung auf die zweite Verbindung.

5. Knickgelenk nach Anspruch 1, 2, 3 oder 4, wobei das Haltemittel mindestens einen Verriegelungsstift (8) umfasst, der für einen Eingriff mit dem Gelenksitz (5) ausgebildet ist.

6. Knickgelenk nach Anspruch 5, wobei, wenn in der zweiten Position, die Hülse (7) von dem mindestens einen Verriegelungsstift (8) in einer Position gehalten wird, in der die zweite Verbindung (6) mit dem Innendurchmesser der Hülse (7) in Eingriff gehalten wird, sodass sich der Gelenkskörper (3) nicht frei bewegt.

7. Knickgelenk nach einem vorstehenden Anspruch, wobei die zweite Verbindung eine Stiftverbindung (6) ist.

8. Verfahren zum Einsetzen einer Verrohrung oder Unterwasserinfrastruktur auf einem Landing-String oder Arbeitsstrang, das Verfahren umfassend:
(a) Anordnen des Knickgelenks nach Anspruch 1 in einer verriegelten Konfiguration, um Schwenken des Gelenks zu verhindern;
(b) Halten einer Verrohrung oder Unterwasserinfrastruktur an einem Landing-String oder Arbeitsstrang über das Knickgelenk;
(c) Anordnen des Knickgelenks in einer unverriegelten Konfiguration, um Schwenken des Gelenks zu ermöglichen; und
(d) Einsetzen der Verrohrung oder Unterwasserinfrastruktur, die an dem Landing-String oder Arbeitsstrang über das Knickgelenk gehalten wird, durch Meerwasser an dem Meeresboden.

9. Verfahren nach Anspruch 8, weiter umfassend Verschieben der Hülse (7), die an dem Knickgelenk bereitgestellt ist, zwischen einer ersten Position und einer zweiten Position, wobei die Hülse in der ersten Position Schwenken des Knickgelenks ermöglicht und die Hülse in der zweiten Position Schwenken des Knickgelenks verhindert.

10. Verfahren nach Anspruch 9, weiter umfassend:
Halten der Hülse (7) in der ersten Position; und
Halten der Hülse (7) in der zweiten Position.

11. Verfahren nach Anspruch 8, 9 oder 10, weiter umfassend Bereitstellen des Knickgelenks zwischen dem Landing-String oder Arbeitsstrang und einem Laufwerkzeug.

12. Verfahren nach Anspruch 8, 9 oder 10, weiter umfassend Bereitstellen des Knickgelenks in einem Arbeitsstrang.

13. Verfahren nach einem der Ansprüche 8 bis 12, weiter umfassend Hindurchführen von Objekten durch eine Innenbohrung des Knickgelenks.

14. Verfahren nach einem der Ansprüche 8 bis 13, weiter umfassend Bereitstellen einer hydraulischen Dichtung zwischen einer Bohrung, die sich durch das Gelenk erstreckt, und der Außenseite des Gelenks, während das Gelenk in verschiedenen gelenkigen Positionen ist.

15. Verfahren nach einem der Ansprüche 8 bis 14, weiter umfassend Übertragen von Drehmoment durch das Gelenk.

## Revendications

1. Joint articulé pour coupler un train de tubage ou une infrastructure sous-marine à un train de tiges de travail, le joint comprenant :
une première connexion (1) ;
une seconde connexion (6) ;
un siège de joint (5) situé entre la première connexion (1) et la seconde connexion (6) ;
un corps de joint (3) prévu sur le siège de joint (5) et connecté à la seconde connexion (6), dans lequel le corps de joint (3) peut s'articuler librement à l'intérieur du siège de joint (5) ;
un mécanisme de verrouillage pour verrouiller le joint de manière réversible, le mécanisme de verrouillage comprenant :
un manchon (7) s'adaptant sur la première connexion (1), le siège de joint (5) et le corps de joint (3) ;
des moyens pour maintenir le manchon (7) sur le siège de joint (5) et le corps de joint (3) dans une première position et une seconde position ;
dans lequel le manchon (7) et les moyens de maintien sont configurés de telle sorte que, lorsque le manchon (7) est maintenu dans la première position, le manchon (7) permet au corps de joint (3) de se déplacer librement à l'intérieur du siège de joint (5), et lorsque le manchon (7) est maintenu dans la seconde position, le manchon (7) vient en prise avec la seconde connexion (6) et empêche le corps de joint (3) de se déplacer librement à l'intérieur du siège de joint (5).

2. Joint articulé selon la revendication 1, dans lequel le joint définit un alésage traversant.

3. Joint articulé selon la revendication 2, comprenant un mécanisme d'étanchéité pour fournir une étanchéité hydraulique entre l'alésage traversant et l'extérieur du joint tandis que le corps de joint (3) est dans diverses positions articulées à l'intérieur du siège de joint (5).

4. Joint articulé selon la revendication 1, 2 ou 3, comprenant en outre des moyens pour transférer un couple de rotation de la première connexion à la seconde connexion.

5. Joint articulé selon la revendication 1, 2, 3 ou 4, dans lequel les moyens de maintien comprennent au moins une broche de verrouillage (8) adaptée pour venir en prise avec le siège de joint (5).

6. Joint articulé selon la revendication 5, dans lequel lorsqu'il est dans la seconde position, le manchon (7) est maintenu par la au moins une broche de verrouillage (8) dans une position dans laquelle la seconde connexion (6) est maintenue en prise avec le diamètre interne du manchon (7), de telle sorte que le corps de joint (3) ne se déplace pas librement.

7. Joint articulé selon une quelconque revendication précédente, dans lequel la seconde connexion est une connexion à broche (6).

8. Procédé de déploiement d'un train de tubage ou d'une infrastructure sous-marine sur un train de tiges de travail ou de pose, le procédé comprenant :
(a) l'agencement du joint articulé selon la revendication 1 dans une configuration verrouillée pour empêcher un pivotement du joint ;
(b) le support d'un train de tubage ou d'une infrastructure sous-marine sur un train de tiges de travail ou de pose via le joint articulé ;
(c) l'agencement du joint articulé dans une configuration déverrouillée pour permettre un pivotement du joint ; et
(d) le déploiement du train de tubage ou de l'infrastructure sous-marine supportée sur le train de tiges de travail ou de pose via le joint articulé à travers l'eau de mer vers le fond marin.

9. Procédé selon la revendication 8, comprenant en outre le déplacement en translation du manchon (7) prévu sur le joint articulé entre une première position et une seconde position, le manchon permettant dans la première position un pivotement du joint articulé, et le manchon empêchant dans la seconde position un pivotement du joint articulé.

10. Procédé selon la revendication 9, comprenant en outre :
le maintien du manchon (7) dans la première position ; et
le maintien du manchon (7) dans la seconde position.

11. Procédé selon la revendication 8, 9 ou 10, comprenant en outre la fourniture du joint articulé entre le train de tiges de travail ou de pose et un outil de déplacement.

12. Procédé selon la revendication 8, 9 ou 10, comprenant en outre la fourniture du joint articulé à l'intérieur d'un train de tiges de travail.

13. Procédé selon l'une quelconque des revendications 8 à 12, comprenant en outre le passage d'objets à travers un alésage interne du joint articulé.

14. Procédé selon l'une quelconque des revendications 8 à 13, comprenant en outre la fourniture d'une étanchéité hydraulique entre un alésage s'étendant à travers le joint et l'extérieur du joint pendant que le joint est dans diverses positions articulées.

15. Procédé selon l'une quelconque des revendications 8 à 14, comprenant la transmission d'un couple de rotation à travers le joint.
